# EUROPÄISCHE PATENTSCHRIFT

(11) **EP 4 173 893 B1**
(45) Veröffentlichungstag und Bekanntmachung des Hinweises auf die Patenterteilung: **29.01.2025**
(21) Anmeldenummer: 22200338.6
(22) Anmeldetag: 07.10.2022
(51) Int. Cl.: B60R 1/00

(54) **VERFAHREN ZUM BEREITSTELLEN EINER ANZEIGE IN EINEM KRAFTFAHRZEUG SOWIE KRAFTFAHRZEUG**
METHOD FOR PROVIDING A DISPLAY IN A MOTOR VEHICLE, AND MOTOR VEHICLE
PROCÉDÉ DE FOURNITURE D'UN AFFICHAGE DANS UN VÉHICULE AUTOMOBILE ET VÉHICULE AUTOMOBILE

(30) Priorität: 28.10.2021 DE 102021212176
(43) Veröffentlichungstag der Anmeldung: 03.05.2023
(73) Patentinhaber: VOLKSWAGEN AG, 38440 Wolfsburg (DE)
(72) Erfinder: Hornung, Norman, 38518 Gifhorn (DE)

(56) Entgegenhaltungen:
- EP-B1- 2 620 326
- EP-B1- 3 140 725
- DE-A1- 102017 220 459
- US-A1- 2002 149 673

## Beschreibung

Die vorliegende Erfindung betrifft ein Verfahren zum Bereitstellen einer Anzeige in einem Kraftfahrzeug sowie ein Kraftfahrzeug.

Aus der EP 3 140 725 B1 ist bereits ein Verfahren zur Unterstützung eines Fahrers beim Koppeln eines Fahrzeugs mit einem Anhänger bekannt. Bei dem Verfahren werden Bilddaten eines Bereichs hinter dem Fahrzeug gewonnen und wenigstens ein Abschnitt des Anhängers basierend auf den Bilddaten identifiziert. Weiterhin wird ein Abstand zwischen dem Fahrzeug und dem identifizierten Abschnitt des Anhängers bestimmt und eine Perspektive basierend auf dem bestimmten Abstand bestimmt. Mit einer im Fahrzeug enthaltenen Steuereinheit wird eine Ansicht des Anhängers basierend auf den Bilddaten erzeugt, wobei die Ansicht die bestimmte Perspektive aufweist. Diese erzeugte Ansicht wird angezeigt. Während sich das Fahrzeug dem Anhänger nähert, ändert sich die bestimmte Perspektive. Das Bestimmen der Perspektive beinhaltet das Zugreifen auf eine Tabelle, die jeden von mehreren Abständen auf eine vorbestimmte Perspektive abbildet. Die Ansicht wird basierend auf der in der Tabelle enthaltenen vorbestimmten Perspektive für denjenigen der mehreren Abstände erzeugt, der dem bestimmten Abstand entspricht.

Weiterhin ist aus der DE 10 2016 210 824 A1 ein Verfahren zur Hilfestellung bei der Ausrichtung einer Anhängerzugkugel an ein Zugfahrzeug mit einer sich auf einem Zugfahrzeug befindlichen Zugdeichsel während eines Anhängeprozesses bekannt. Bei dem Verfahren wird eine virtuelle Draufsicht einer Anhängerkupplung bereitgestellt, wobei die Draufsicht der Anhängerkupplung automatisch bereitgestellt wird, wenn das Zugfahrzeug sich innerhalb eines zuvor festgelegten Bereichs des Anhängerfahrzeugs befindet. Bei dem Verfahren ist es weiterhin vorgesehen, dass ein Schwenken eines Hauptkamerabilds erfolgen kann.

Überdies offenbart die US 2002/0149673 A1 ein Bildanzeigeverfahren für eine Rückfahrkamera zum Anzeigen eines von einer an einem Fahrzeug montierten Rückfahrkamera aufgenommenen Bildes auf einem Bildschirm, der von einem Fahrersitz aus betrachtet werden kann.

Darüber hinaus ist aus der DE 10 2017 220 459 A1 ein Anhängerankuppelassistent zum Unterstützen eines Ankuppelvorgangs eines rückwärts an einen Anhänger heranfahrenden Kraftfahrzeugs bekannt.

Weiterhin offenbart die EP 2 620 326 B1 ein Verfahren zum Unterstützten eines Ankuppelns eines Anhängers.

Aufgabe der vorliegenden Erfindung ist es, eine Lösung zu schaffen, welche einer Person ein besonders zuverlässiges und durchgängiges Beobachten eines Anhängevorgangs eines Anhängers an eine Anhängerkupplung eines Kraftfahrzeugs ermöglicht.

Diese Aufgabe wird erfindungsgemäß durch die Gegenstände der unabhängigen Patentansprüche gelöst. Weitere mögliche Ausgestaltungen der Erfindung sind in den Unteransprüchen, der Beschreibung und den Figuren offenbart.

Die Erfindung betrifft ein Verfahren zum Bereitstellen einer Anzeige in einem Kraftfahrzeug. Bei dieser Anzeige handelt es sich um eine optische Darstellung von veränderlichen Informationen. Bei dem Verfahren ist es vorgesehen, dass mittels einer Kameraeinrichtung eine Umgebung des Kraftfahrzeugs und eine Anhängerkupplung des Kraftfahrzeugs umfassende Bilder aufgezeichnet werden. Das bedeutet, dass die Kameraeinrichtung in die Umgebung des Kraftfahrzeugs gerichtet ist, wobei ein Sichtbereich der Kameraeinrichtung auf die Anhängerkupplung des Kraftfahrzeugs und in die Umgebung des Kraftfahrzeugs gerichtet ist. Die Anhängerkupplung ist eine Vorrichtung, über die das Kraftfahrzeug mit einem Anhänger verbunden werden kann. Bei dem Verfahren ist es weiterhin vorgesehen, dass ein Abstand zwischen der Anhängerkupplung und dem Anhänger ermittelt wird. Für einen Anhängevorgang ist die Anhängerkupplung mit dem Anhänger zu verbinden. Insbesondere kann das Kraftfahrzeug dazu eingerichtet sein, den Anhängevorgang zumindest assistiert, insbesondere zumindest teilautomatisiert, insbesondere vollautomatisiert durchzuführen. Bei dem Verfahren ist es weiterhin vorgesehen, dass anhand der Bilder eine zumindest die Anhängerkupplung darstellende Anzeige erstellt wird. Diese Anzeige wird mittels einer Anzeigeeinrichtung in dem Kraftfahrzeug ausgegeben, wodurch über die Anzeige eine Person den Anhängevorgang verfolgen kann. Bei dieser Anzeigeeinrichtung handelt es sich um eine Vorrichtung zur Informationsdarstellung, welche dazu eingerichtet ist, eine optische Darstellung auszugeben. Bei dieser Anzeigeeinrichtung kann es sich um eine Bildschirmeinrichtung handeln. Diese Bildschirmeinrichtung kann Teil des Kraftfahrzeugs, insbesondere Teil einer Mensch-Maschine-Schnittstelle des Kraftfahrzeugs sein. Alternativ kann die Bildschirmeinrichtung Teil eines zu dem Kraftfahrzeugs separaten mobilen elektronischen Endgeräts wie eines Smartphones oder eines Tablet-PCs sein.

Um ein besonders genaues und durchgängiges Beobachten des Anhängevorgangs für die Person zu ermöglichen, ist es vorgesehen, dass bei einem ermittelten Abstand oberhalb oder gleich eines ersten Grenzwerts die Anzeige als eine isometrische Ansicht dargestellt wird. In der isometrischen Ansicht wird die Umgebung des Kraftfahrzeugs aus einer Überblicksperspektive von schräg oben dargestellt. Wird ein Abstand ermittelt, welcher unterhalb des zweiten Grenzwerts liegt oder gleich dem zweiten Grenzwert ist, wobei der zweite Grenzwert kleiner ist als der erste Grenzwert, dann wird die Anzeige als Draufsicht und somit in einer Ansicht von oben dargestellt. Bei der Draufsicht kann es sich um eine zweidimensionale orthogonale Projektion einer räumlichen Gegebenheit handeln. Wird festgestellt, dass der Abstand zwischen der Anhängerkupplung und dem Anhänger zwischen dem ersten Grenzwert und dem zweiten Grenzwert liegt, dann wird die Anzeige als eine Zwischenperspektive dargestellt, wobei diese Zwischenperspektive einem virtuellen Schwenkwinkel einer virtuellen Verschwenkung der Kameraeinrichtung von einer der isometrischen Ansicht zugeordneten virtuellen ersten Kameraposition zu einer der Draufsicht zugeordneten virtuellen zweiten Kameraposition zugeordnet ist und wobei dieser virtuelle Schwenkwinkel in Abhängigkeit von dem Abstand anhand einer Formel ermittelt wird. Anhand des ermittelten Abstands zwischen der Anhängerkupplung und dem Anhänger kann somit festgestellt werden, ob sich die Anhängerkupplung zu dem Anhänger in einem Fernbereich oder in einem Nahbereich oder in einem Zwischenbereich befindet. Weist die Anhängerkupplung zu dem Anhänger wenigstens den Abstand auf, welcher größer oder gleich dem ersten Grenzwert ist, dann ist die Anhängerkupplung zu dem Anhänger im Fernbereich angeordnet. Weist die Anhängerkupplung zu dem Anhänger den Abstand auf, welcher kleiner oder gleich dem zweiten Grenzwert ist, dann ist die Anhängerkupplung zu dem Anhänger in dem Nahbereich angeordnet. Ist der ermittelte Abstand der Anhängerkupplung zu dem Anhänger zwischen dem ersten Grenzwert und dem zweiten Grenzwert, dann ist die Anhängerkupplung zu dem Anhänger in dem Zwischenbereich angeordnet. Wenn die Anhängerkupplung zu dem Anhänger in dem Fernbereich angeordnet ist, wird die Anzeige als isometrische Ansicht dargestellt. Ist die Anhängerkupplung zu dem Anhänger in dem Nahbereich angeordnet, dann wird die Anzeige als Draufsicht dargestellt. Bei der Anordnung der Anhängerkupplung zu dem Anhänger in dem Zwischenbereich erfolgt ein virtueller Kameraschwenk von der isometrischen Ansicht in die Draufsicht mit sukzessiver Annäherung der Anhängerkupplung an den Anhänger. Das bedeutet, dass je näher die Anhängerkupplung zu dem Anhänger in dem Nahbereich angeordnet ist, desto steiler ist die Ansicht, als welche die Anzeige ausgegeben wird. Je näher also die Anhängerkupplung zu dem Anhänger in dem Nahbereich angeordnet ist, desto ähnlicher ist die Anzeige der Draufsicht und desto unähnlicher ist die Anzeige der isometrischen Ansicht. Für den kontinuierlichen Übergang der Anzeige in dem Zwischenbereich von der isometrischen Ansicht zu der Draufsicht ist die Formel vorgesehen, über welche anhand des ermittelten Abstands zwischen der Anhängerkupplung und dem Anhänger der virtuelle Schwenkwinkel der virtuellen Verschwenkung der Kameraeinrichtung ermittelt wird. Die Anzeige wird wiederum in Abhängigkeit von diesem ermittelten virtuellen Schwenkwinkel erzeugt. Hierbei wird die Anzeige als Zwischenform zwischen der Draufsicht und der isometrischen Ansicht erzeugt. Dieses in der Anzeige erzeugte virtuelle Verschwenken der Kameraeinrichtung ermöglicht, dass während des Anhängevorgangs ein Beobachter die Anhängerkupplung besonders einfach und zuverlässig verfolgen kann. Dadurch kann die Person gegebenenfalls in den Anhängevorgang besonders informiert eingreifen und hierdurch beispielsweise eine Kollision vermeiden.

Beider Erfindung ist es vorgesehen, dass die Bilder mittels der Kameraeinrichtung aufgezeichnet werden, die einen Öffnungswinkel von mehr als 120 Grad, insbesondere mehr als 160 Grad, insbesondere mehr als 170 Grad aufweist. Die Kameraeinrichtung kann somit eine Linse mit einem sehr großen Öffnungswinkel von nahezu 180 Grad aufweisen. Hierdurch können über einen besonders großen Erfassungswinkel Bilder mittels der Kameraeinrichtung aufgezeichnet werden, wobei ein besonders großer Bereich der Umgebung des Kraftfahrzeugs mittels der Kameraeinrichtung aufgezeichnet werden kann. Hierdurch wird ermöglicht, dass mittels der Kameraeinrichtung besonders viele Informationen über die Umgebung des Kraftfahrzeugs gesammelt werden können. Hierdurch wird weiterhin ermöglicht, dass ohne ein reales Verschwenken der Kameraeinrichtung sowohl die isometrische Ansicht als auch die Draufsicht als auch sämtliche virtuellen Schwenkwinkel für den Zwischenbereich aus mittels der Kameraeinrichtung aufgezeichneten Bildern abgeleitet werden können.

Zusätzlich ist es vorgesehen, dass der virtuelle Schwenkwinkel anhand einer exponentiellen Funktion ermittelt wird. Über die Funktion kann für jeden möglichen Abstand der Anhängerkupplung relativ zu dem Anhänger in dem Zwischenbereich ein individueller virtueller Schwenkwinkel ermittelt werden. Hierdurch kann mittels der Anzeige ein besonders fließender und somit besonders kontinuierlicher Übergang aus der isometrischen Ansicht in die Draufsicht bei der Anordnung der Anhängerkupplung relativ zu dem Anhänger in dem Zwischenbereich bereitgestellt werden. Ein ruckhaftes Verstellen der in der Anzeige dargestellten Ansicht kann somit vermieden werden. Infolgedessen kann die Person die Anzeige besonders einfach verfolgen aufgrund eines besonders fließenden und weichen Übergangs zwischen den jeweiligen Ansichten.

Weiterhin zusätzlich ist es vorgesehen, dass der erste Grenzwert und/oder der zweite Grenzwert in Abhängigkeit von einem Fahrzeugmodell des Kraftfahrzeugs vorgegeben werden. Insbesondere können von dem Fahrzeugmodell eine Anordnung der Kameraeinrichtung und/oder eine Anordnung der Anhängerkupplung an dem Kraftfahrzeug abhängen. Somit sind der erste Grenzwert und/oder der zweite Grenzwert in Abhängigkeit von dem Fahrzeugmodell des Kraftfahrzeugs anzupassen, um zu gewährleisten, dass in der Anzeige jederzeit während des Anhängevorgangs die Anhängerkupplung dargestellt wird. Es können somit der Nahbereich und/oder der Fernbereich in Abhängigkeit von dem Fahrzeugmodell über das Vorgeben der jeweiligen Grenzwerte definiert werden. Infolgedessen wird ein besonders zuverlässiges durchgängiges Beobachten der Anhängerkupplung während des Anhängevorgangs über die Anzeige für eine Person ermöglicht.

In einer weiteren möglichen Ausgestaltung der Erfindung ist es vorgesehen, dass der zweite Grenzwert in Abhängigkeit von einer Verbauposition der Kameraeinrichtung an dem Kraftfahrzeug vorgegeben wird. Je nachdem, wo die Kameraeinrichtung somit an dem Kraftfahrzeug angeordnet ist und infolgedessen wie ein Sichtbereich der Kameraeinrichtung in die Umgebung des Kraftfahrzeugs ausgerichtet ist, wird somit der zweite Grenzwert, durch welchen der Nahbereich definiert ist, vorgegeben. Hierdurch kann sichergestellt werden, dass über die Anzeige in jeder der Ansichten die Anhängerkupplung dargestellt ist. Ein derartiges Verschwenken der Ansicht, dass die Anhängerkupplung nicht mehr in der Anzeige dargestellt ist, kann somit zumindest im Wesentlichen vermieden werden. Es kann somit eine dauerhafte Beobachtbarkeit der Anhängerkupplung über die Anzeige während des Anhängevorgangs sichergestellt werden.

In einer weiteren möglichen Ausgestaltung der Erfindung ist es vorgesehen, dass der Abstand zwischen der Anhängerkupplung und dem Anhänger mehrmals ermittelt wird und die Anzeige mehrmals in Abhängigkeit von dem jeweiligen ermittelten Abstand angepasst wird. Hierbei kann der Abstand insbesondere in regelmäßigen Zeitabständen ermittelt werden, sodass die Anzeige kontinuierlich an den ermittelten jeweiligen Abstand angepasst werden kann. Hierbei kann der Abstand insbesondere mit besonders kurzen zeitlichen Abständen mehrmals hintereinander ermittelt werden, um einen besonders fließenden Übergang der jeweiligen Ansichten in der Anzeige während der Anordnung der Anhängerkupplung relativ zu dem Anhänger in dem Zwischenbereich zu ermöglichen. Insbesondere können für einen besonders dynamischen virtuellen Kameraschwenk für eine Anordnung der Anhängerkupplung relativ zu dem Anhänger in dem Zwischenbereich bei einem Anpassen der Anzeige die jeweiligen Ansichten der Anzeige dynamisch ineinander übergehen. Hierdurch kann ein besonders weicher Übergang zwischen den jeweiligen Ansichten der Anzeige ermöglicht werden und ein unerwünschtes Rucken jeweiliger Ansichten der Anzeige zumindest im Wesentlichen vermieden werden.

In einer weiteren möglichen Ausgestaltung der Erfindung ist es vorgesehen, dass die Anzeige während eines automatischen Ankuppelvorgangs bereitgestellt wird. Bei dem automatischen Ankuppelvorgang kann das Kraftfahrzeug automatisiert relativ zu dem Anhänger bewegt werden, wodurch das Kraftfahrzeug über die Anhängerkupplung automatisiert mit dem Anhänger verbunden werden kann. Über die Anzeige kann eine Person, insbesondere der Fahrer des Kraftfahrzeugs, diesen automatischen Ankuppelvorgang besonders einfach überwachen.

In einer weiteren möglichen Ausgestaltung der Erfindung ist es vorgesehen, dass die mittels der Anzeigeeinrichtung ausgegebene Anzeige eine Anhängerklaue des Anhängers umfasst. Das bedeutet, dass in der Anzeige sowohl die Anhängerkupplung des Kraftfahrzeugs als auch die Anhängerklaue des Anhängers dargestellt ist. Hierbei ist es vorgesehen, dass sowohl die Anhängerkupplung des Kraftfahrzeugs als auch die Anhängerklaue des Anhängers jederzeit während des Anhängevorgangs und somit durchgehend während des Bereitstellens der Anzeige in der Anzeige dargestellt sind. Hierdurch wird ermöglicht, dass die Person über die Anzeige besonders einfach und zuverlässig eine Annäherung der Anhängerkupplung zu der Anhängerklaue beobachten und überprüfen kann. Die Anhängerklaue ist dazu eingerichtet mit der Anhängerkupplung des Kraftfahrzeugs in Eingriff gebracht zu werden, wodurch der Anhänger mit dem Kraftfahrzeug verbunden wird. Somit bildet die Anhängerklaue das Gegenstück zu der Anhängerkupplung.

In weiterer möglicher Ausgestaltung der Erfindung ist es vorgesehen, dass mittels einer Rückfahrkamera als Kameraeinrichtung die Bilder aufgezeichnet werden. Das bedeutet, dass mittels der Rückfahrkamera die Bilder aufgezeichnet werden, welche die rückseitige Umgebung des Kraftfahrzeugs umfassen. Da Anhängerkupplungen von Kraftfahrzeugen üblicherweise an einer Rückseite des jeweiligen Kraftfahrzeugs angeordnet sind, ermöglicht das Verwenden der Rückfahrkamera als Kameraeinrichtung, dass die Anhängerkupplung mit besonders großer Zuverlässigkeit in dem Sichtbereich der Kameraeinrichtung angeordnet ist. Hierdurch kann sichergestellt werden, dass in der Anzeige zumindest die Anhängerkupplung dauerhaft dargestellt ist. Die Rückfahrkamera ist beispielsweise eine Videokamera, welche einem Unterstützen eines Rückwärtsfahrens dient. Bilder der Rückfahrkamera können auf ein Display, insbesondere die Anzeigeeinrichtung, in einem Fahrerbereich des Kraftfahrzeugs übertragen werden.

Die Erfindung betrifft des Weiteren ein Kraftfahrzeug, mit einer Kameraeinrichtung sowie mit einer Anzeigeeinrichtung. Das Kraftfahrzeug ist dazu eingerichtet, ein Verfahren, wie es bereits im Zusammenhang mit dem erfindungsgemäßen Verfahren zum Bereitstellen der Anzeige in dem Kraftfahrzeug beschrieben worden ist, auszuführen. Die Kameraeinrichtung ist somit dazu eingerichtet, die Umgebung des Kraftfahrzeugs und die Anhängerkupplung des Kraftfahrzeugs umfassende Bilder aufzuzeichnen. Weiterhin kann das Kraftfahrzeug eine elektronische Recheneinrichtung umfassen, welche dazu eingerichtet ist, die Bilder von der Kameraeinrichtung zu empfangen und anhand der Bilder die zumindest die Anhängerkupplung darstellende Anzeige zu erstellen. Die elektronische Recheneinrichtung kann weiterhin dazu eingerichtet sein, einen Abstand zwischen der Anhängerkupplung und dem Anhänger zu ermitteln. Hierbei kann die elektronische Recheneinrichtung den Abstand anhand von Sensordaten und/oder anhand der Bilder ermitteln. Weiterhin ist die Anzeigeeinrichtung des Kraftfahrzeugs dazu eingerichtet, die Anzeige in dem Kraftfahrzeug auszugeben, insbesondere in einem Innenraum des Kraftfahrzeugs. Vorteile und vorteilhafte Weiterbildungen des erfindungsgemäßen Verfahrens sind als Vorteile und vorteilhafte Weiterbildungen des erfindungsgemäßen Kraftfahrzeugs anzusehen und umgekehrt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

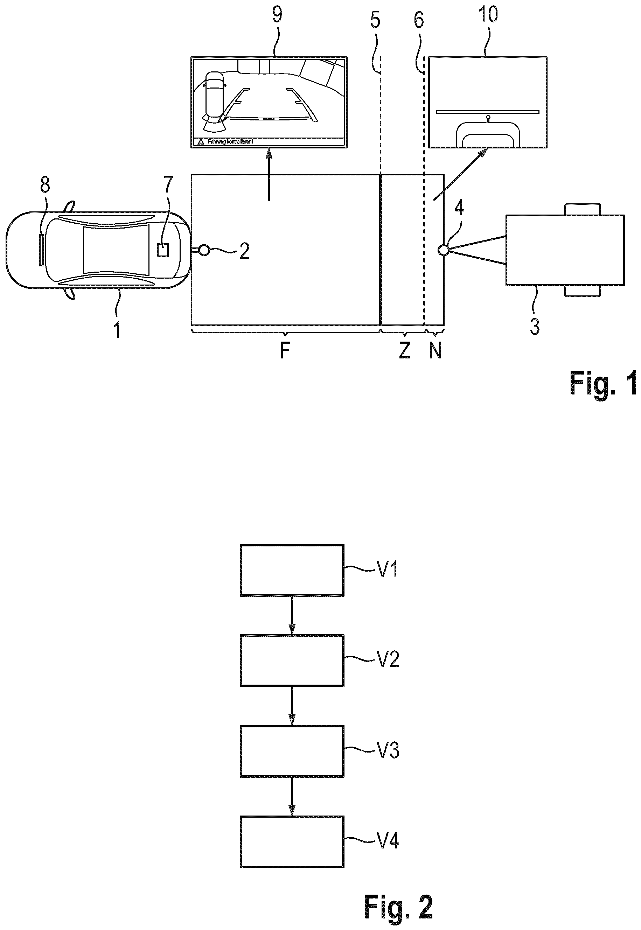

- Fig. 1: eine schematische Draufsicht eines Kraftfahrzeugs mit einer Anhängerkupplung sowie eines Anhängers mit einer Anhängerklaue, wobei die Anhängerkupplung und die Anhängerklaue in einem automatischen Ankuppelvorgang miteinander zu verbinden sind und wobei ein Abstand zwischen der Anhängerkupplung und der Anhängerklaue des Anhängers in einem Fernbereich, in einem Zwischenbereich oder in einem Nahbereich liegen kann, wobei eine Ansicht für eine in dem Kraftfahrzeug mittels einer Anzeigeeinrichtung ausgegebenen Anzeige in Abhängigkeit von dem Abstand der Anhängerkupplung relativ zu der Anhängerklaue des Anhängers gewählt ist; und
- Fig. 2: ein Verfahrensschema für ein Verfahren zum Bereitstellen der Anzeige in dem Kraftfahrzeug, wobei die Anzeige je nach ermitteltem Abstand zwischen der Anhängerkupplung und dem Anhänger als isometrische Ansicht oder als Draufsicht oder als zwischenverschwenkte Ansicht zwischen der isometrischen Ansicht und der Draufsicht erstellt wird.

In Fig. 1 sind in einer Draufsicht ein Kraftfahrzeug 1 mit einer Anhängerkupplung 2 und ein Anhänger 3 mit einer Anhängerklaue 4 in einer Draufsicht dargestellt. Um den Anhänger 3 an dem Kraftfahrzeug 1 anzukuppeln, ist die Anhängerklaue 4 mit der Anhängerkupplung 2 zu verbinden. Insbesondere kann die Anhängerklaue 4 im Rahmen eines automatischen Ankuppelvorgangs zumindest assistiert, insbesondere zumindest teilautomatisiert, insbesondere vollautomatisiert, angenähert und verbunden werden.

Weiterhin können in Fig. 1 ein Fernbereich F, ein Nahbereich N sowie ein Zwischenbereich Z erkannt werden. Ein Abstand der Anhängerkupplung 2 zu der Anhängerklaue 4 kann in dem Fernbereich F oder in dem Zwischenbereich Z oder in dem Nahbereich N liegen. Eine jeweilige Grenze zwischen dem Fernbereich F und dem Zwischenbereich Z ist durch einen ersten Grenzwert 5 vorgegeben. Eine Grenze zwischen dem Zwischenbereich Z und dem Nahbereich N ist durch einen zweiten Grenzwert 6 vorgegeben, welcher kleiner ist als der erste Grenzwert 5. Der erste Grenzwert 5 und der zweite Grenzwert 6 sind vorliegend in Abhängigkeit von einem Fahrzeugtyp des Kraftfahrzeugs 1 vorgegeben. Beträgt somit ein Abstand zwischen der Anhängerkupplung 2 und der Anhängerklaue 4 einen Wert größer oder gleich dem ersten Grenzwert 5, dann wird festgestellt, dass die Anhängerkupplung 2 relativ zu der Anhängerklaue 4 in dem Fernbereich F angeordnet ist. Wird festgestellt, dass der Abstand zwischen der Anhängerkupplung 2 und der Anhängerklaue 4 kleiner oder gleich dem zweiten Grenzwert 6 ist, dann wird festgestellt, dass die Anhängerkupplung 2 relativ zu der Anhängerklaue 4 in dem Nahbereich N angeordnet ist. Wird festgestellt, dass der Abstand zwischen der Anhängerkupplung 2 und der Anhängerklaue 4 einen Wert zwischen dem ersten Grenzwert 5 und dem zweiten Grenzwert 6 aufweist, dann wird festgestellt, dass die Anhängerkupplung 2 relativ zu der Anhängerklaue 4 in dem Zwischenbereich Z angeordnet ist.

Wie in Fig. 1 weiterhin erkannt werden kann, umfasst das Kraftfahrzeug 1 eine als Rückfahrkamera ausgebildete Kameraeinrichtung 7. Diese Kameraeinrichtung 7 ist mit ihrem Sichtbereich in eine rückwärtige Umgebung des Kraftfahrzeugs 1 ausgerichtet. Vorliegend ist die Kameraeinrichtung 7 schematisch mit einem Kästchen gekennzeichnet. Vorliegend wird zumindest der zweite Grenzwert 6, insbesondere zusätzlich der erste Grenzwert 5, in Abhängigkeit von einer Verbauposition der Kameraeinrichtung 7 an dem Kraftfahrzeug 1 gewählt. Die Kameraeinrichtung 7 weist vorliegend einen Öffnungswinkel von mehr als 120 Grad, insbesondere von mehr als 160 Grad, insbesondere von mehr als 170 Grad, insbesondere von circa 180 Grad auf. Die Kameraeinrichtung 7 ist dazu eingerichtet, jeweilige Bilder aufzuzeichnen, welche sowohl die Umgebung des Kraftfahrzeugs 1 als auch die Anhängerkupplung 2 darstellen. Zusätzlich kann in den Bildern die Anhängerklaue 4 dargestellt sein. Anhand der mittels der Kameraeinrichtung 7 aufgezeichneten Bilder kann eine zumindest die Anhängerkupplung 2 darstellende Anzeige erzeugt werden. Diese Anzeige kann zusätzlich die Anhängerklaue 4 darstellen. Das Kraftfahrzeug 1 kann eine Anzeigeeinrichtung 8 umfassen, welche vorliegend ebenfalls schematisch mit einem Kästchen gekennzeichnet ist. Vorliegend ist die Anzeigeeinrichtung 8 Teil eines sogenannten Infotainmentsystems. Diese Anzeigeeinrichtung 8 ist dazu eingerichtet, die Anzeige in dem Kraftfahrzeug 1, insbesondere in einem Innenraum des Kraftfahrzeugs 1, auszugeben. Wird festgestellt, dass die Anhängerkupplung 2 in dem Fernbereich F relativ zu der Anhängerklaue 4 angeordnet ist, dann wird die Anzeige in Form einer isometrischen Ansicht 9 bereitgestellt. Wird festgestellt, dass die Anhängerkupplung 2 relativ zu der Anhängerklaue 4 in dem Nahbereich N angeordnet ist, dann wird die Anzeige mittels der Anzeigeeinrichtung 8 als Draufsicht 10 bereitgestellt. Bei dem Zwischenbereich Z handelt es sich um einen virtuellen dynamischen Schwenkbereich, wobei bei einem Feststellen einer Anordnung der Anhängerkupplung 2 relativ zu der Anhängerklaue 4 in dem Zwischenbereich Z die Anzeige als eine Zwischenperspektive zwischen der isometrischen Ansicht 9 und der Draufsicht 10 dargestellt wird.

In Fig. 2 ist ein Verfahrensschema für ein Verfahren zum Bereitstellen der Anzeige in dem Kraftfahrzeug 1 dargestellt. Das Verfahren umfasst vier Verfahrensschritte, wobei in einem ersten Verfahrensschritt V1 mittels der Kameraeinrichtung 7 die die Umgebung des Kraftfahrzeugs 1 und die Anhängerkupplung 2 des Kraftfahrzeugs 1 umfassenden Bilder aufgezeichnet werden. In einem zweiten Verfahrensschritt V2 des Verfahrens ist es vorgesehen, dass der Abstand zwischen der Anhängerkupplung 2 und dem Anhänger 3, insbesondere der Anhängerklaue 4, ermittelt wird. Hierbei kann der Abstand zwischen der Anhängerkupplung 2 und dem Anhänger 3, insbesondere der Anhängerklaue 4, mehrmals, insbesondere regelmäßig und somit in zueinander zumindest im Wesentlichen gleichen Zeitabständen ermittelt werden. In einem dritten Verfahrensschritt V3 des Verfahrens ist es vorgesehen, dass anhand der Bilder die zumindest die Anhängerkupplung 2 darstellende Anzeige erstellt wird. Hierbei kann die Anzeige mehrmals in Abhängigkeit von dem jeweiligen ermittelten Abstand angepasst werden. In einem vierten Verfahrensschritt V4 des Verfahrens ist es vorgesehen, dass die Anzeige mittels der Anzeigeeinrichtung 8 in dem Kraftfahrzeug 1 ausgegeben wird, wodurch eine Person den Ankuppelvorgang über die Anzeigeeinrichtung 8 besonders gut überwachen kann.

Im Rahmen des dritten Verfahrensschritts V3 wird die Anzeige als die isometrische Ansicht 9 dargestellt, wenn der ermittelte Abstand zwischen der Anhängerkupplung 2 und der Anhängerklaue 4 oberhalb oder gleich dem ersten Grenzwert 5 liegt. Weiterhin ist es vorgesehen, dass die Anzeige als die Draufsicht 10 dargestellt wird, wenn der ermittelte Abstand zwischen der Anhängerkupplung 2 und der Anhängerklaue 4 unterhalb oder gleich dem zweiten Grenzwert 6 liegt. Eine durch den Nahbereich N vorgegebene Restwegstrecke für den Ankuppelvorgang kann abhängig sein von der Verbauposition der Kameraeinrichtung 7 an dem Kraftfahrzeug 1. Die zurückzulegende Restwegstrecke in dem Nahbereich N wird mit einem Ausgeben der Anzeige in der Draufsicht 10 durchgeführt.

Es ist weiterhin vorgesehen, dass die Anzeige als Zwischenperspektive dargestellt wird, wenn ermittelt wird, dass der Abstand zwischen der Anhängerkupplung 2 und der Anhängerklaue 4 zwischen dem ersten Grenzwert 5 und dem zweiten Grenzwert 6 liegt. Hierbei ist diese Zwischenperspektive einem virtuellen Schwenkwinkel einer virtuellen Verschwenkung der Kameraeinrichtung 7 von einer der isometrischen Ansicht 9 zugeordneten virtuellen ersten Kameraposition zu einer der Draufsicht 10 zugeordneten virtuellen zweiten Kameraposition zugeordnet ist. Das bedeutet, dass eine virtuelle Verschwenkung der Kameraeinrichtung 7 von der ersten virtuellen Kameraposition zu der zweiten virtuellen Kameraposition simuliert wird und die Zwischenperspektive in Abhängigkeit von einem virtuellen Schwenkwinkel der Kameraeinrichtung 7 entlang dieser virtuellen Verschwenkung festgestellt wird. Hierbei beschreibt die erste virtuelle Kameraposition eine virtuelle Ausrichtung der Kameraeinrichtung 7, in welcher die Kameraeinrichtung 7 die isometrische Ansicht 9 aufzeichnen kann. Die zweite virtuelle Kameraposition der Kameraeinrichtung 7 repräsentiert eine Ausrichtung der Kameraeinrichtung 7, aus welcher die Kameraeinrichtung 7 die Draufsicht 10 aufzeichnen könnte. Ein reales Verschwenken der Kameraeinrichtung 7 erfolgt bei dem Verfahren jedoch nicht.

Der virtuelle Schwenkwinkel hängt wiederum von dem Abstand der Anhängerkupplung 2 zu der Anhängerklaue 4 in dem Zwischenbereich Z ab. Hierdurch soll ein virtueller dynamischer Schwenkverlauf der Kameraeinrichtung 7 über den Zwischenbereich Z dargestellt werden. Um eine besonders stetige und dynamische virtuelle Verschwenkung der Kameraeinrichtung 7 über einen Zwischenbereich Z in der Anzeige darstellen zu können, ist es vorgesehen, dass der virtuelle Schwenkwinkel in Abhängigkeit von dem ermittelten Abstand zwischen der Anhängerkupplung 2 und der Anhängerklaue 4 anhand einer Formel ermittelt wird. Bei dieser Formel kann es sich insbesondere um eine lineare oder um eine exponentielle Funktion oder um eine sonstige Funktion handeln. Statt einen fixen virtuellen Schwenk ab bestimmten, in einer Tabelle aufgeführten Schwenkwerten durchzuführen, wie es bei der eingangs zitierten EP 3 140 725 B1 der Fall ist, wird somit der unterschiedliche virtuelle Schwenkwinkel innerhalb des Zwischenbereichs Z anhand der Funktion berechnet. In dieser Funktion wird somit eine Beziehung bereitgestellt zwischen einem von der Anhängerkupplung 2 relativ zu der Anhängerklaue 4 zurückgelegten Weg und einem dargestellten Blickwinkel, vorliegend der Ansicht in der Anzeige.

Das beschriebene Verfahren ermöglicht, dass in der Anzeige eine Kameraansicht virtuell aus der isometrischen Ansicht 9 in die Draufsicht 10 geschwenkt wird. Die Draufsicht 10 vermittelt gerade bei kleinen Abständen zwischen dem Kraftfahrzeug 1 und einem Objekt ein erhöhtes Sicherheitsgefühl, weil Abstände besonders gut von einem Fahrer eingeschätzt werden können. Hierdurch kann ein besonders hohes Vertrauen des Fahrers in den automatischen Ankuppelvorgang erreicht werden. Der automatische Ankuppelvorgang kann insbesondere von einem Fahrerassistenzsystem durchgeführt werden. Bei diesem automatischen Ankuppelvorgang wird das Kraftfahrzeug 1 automatisiert an den Anhänger 3 herangeführt. Solange die Anhängerkupplung 2 in dem Fernbereich F relativ zu der Anhängerklaue 4 angeordnet ist, wird die isometrische Ansicht 9 eines Rückfahrkamerabilds der Kameraeinrichtung 7 mittels der Anzeigeeinrichtung 8 angezeigt. Passiert die Anhängerkupplung 2 eine Grenze zwischen dem Fernbereich F und dem Zwischenbereich Z, dann soll das Rückfahrkamerabild von der isometrischen Ansicht 9 in die Draufsicht 10 schwenken. Dieser Vorgang erfolgt dynamisch in einem Schwenkbereich, welcher dem Zwischenbereich Z zugeordnet ist, um einen geschmeidigen Übergang der Ansichten zu generieren. Passiert die Anhängerkupplung 2 die Grenze zwischen Zwischenbereich Z und Nahbereich N, dann wird die Ansicht als Draufsicht 10 mittels der Anzeigeeinrichtung 8 ausgegeben, wobei die Anzeige in der Draufsicht 10 während eines Zurücklegens der letzten Wegstrecke in dem Nahbereich N bis zu einem Zielpunkt als Anzeige dargestellt wird, wobei der Zielpunkt erreicht ist, wenn die Anhängerkupplung 2 die Anhängerklaue 4 erreicht. Diese Restwegstrecke und somit der Nahbereich N kann ein skalierbarer Offset sein zwischen der Anhängerklaue 4 und der Grenze zwischen dem Zwischenbereich Z und dem Nahbereich N. Bewegt sich das Kraftfahrzeug 1 weg von dem Anhänger 3 und somit in Fahrtrichtung nach vorne, dann erfolgt der virtuelle dynamische Kameraschwenk in umgekehrter Richtung, also von der Draufsicht 10 in die isometrische Ansicht 9. Der Kameraschwenk wird als virtuell bezeichnet, weil die als Kameraeinrichtung 7 eingesetzte Rückfahrkamera eine Linse mit einem sehr großen Öffnungswinkel von nahezu 180 Grad besitzt und infolgedessen ein Bildausschnitt jeweiliger mittels der Kameraeinrichtung 7 aufgezeichneter Bilder über Softwarealgorithmen geändert werden kann, ohne dass die Kameraeinrichtung 7 mechanisch ihren Blickwinkel zu ändern hat.

Der Nahbereich N, der Zwischenbereich Z sowie der Fernbereich F sind je nach Fahrzeugmodell des Kraftfahrzeugs 1 derart zu wählen, dass im über die Anzeige mittels der Anzeigeeinrichtung 8 ausgegebenen Bildausschnitt die Zielposition und somit die Anhängerklaue 4 dargestellt und somit für einen Fahrer ausreichend sichtbar ist. Ein zu frühes virtuelles Verschwenken könnte dazu führen, dass der Fahrer die Anhängerklaue 4 in der Draufsicht 10 nicht sieht. Ein zu spätes virtuelles Verschwenken könnte eine sehr schnelle Bilddynamik im Sinne eines Ansichtswechsels nach sich ziehen, was als unangenehm und hektisch empfunden werden könnte. Ebenso ist der Nahbereich N passend zu wählen, um die Draufsicht 10 optimal auszunutzen.

Die Anzeige wird während des automatischen Ankuppelvorgangs ausgegeben, wobei es Ziel ist, die Anzeige während des automatischen Ablaufs des Ankuppelns zur optischen Überwachung durch den Fahrer bereitzustellen. Infolgedessen kann der Fahrer in den Ankuppelvorgang eingreifen.

Insgesamt zeigt die Erfindung, wie ein virtueller dynamischer Kameraschwenk bei Annäherung eines Kraftfahrzeugs 1 an den Anhänger 3 in einem Ankuppelvorgang bereitgestellt werden kann.

### Bezugszeichenliste

- 1: Kraftfahrzeug
- 2: Anhängerkupplung
- 3: Anhänger
- 4: Anhängerklaue
- 5: erster Grenzwert
- 6: zweiter Grenzwert
- 7: Kameraeinrichtung
- 8: Anzeigeeinrichtung
- 9: isometrische Ansicht
- 10: Draufsicht
- F: Fernbereich
- Z: Zwischenbereich
- N: Nahbereich
- V1 bis V4: jeweilige Verfahrensschritte

## Patentansprüche

1. Verfahren zum Bereitstellen einer Anzeige in einem Kraftfahrzeug (1), bei welchem
- mittels einer Kameraeinrichtung (7) eine Umgebung des Kraftfahrzeugs (1) und eine Anhängerkupplung (2) des Kraftfahrzeugs (1) umfassende Bilder aufgezeichnet werden (V1),
- ein Abstand zwischen der Anhängerkupplung (2) und einem Anhänger (3) ermittelt wird (V2),
- anhand der Bilder eine zumindest die Anhängerkupplung (2) darstellende Anzeige erstellt wird (V3), wobei
∘ bei einem ermittelten Abstand oberhalb oder gleich eines ersten Grenzwerts (5) die Anzeige als eine isometrische Ansicht (9) dargestellt wird,
∘ bei einem ermittelten Abstand unterhalb oder gleich eines zweiten Grenzwerts (6), welcher kleiner ist als der erste Grenzwert (5), die Anzeige als Draufsicht (10) dargestellt wird, und
∘ bei einem Abstand zwischen dem ersten Grenzwert (5) und dem zweiten Grenzwert (6) die Anzeige als eine Zwischenperspektive dargestellt wird, wobei diese Zwischenperspektive einem virtuellen Schwenkwinkel einer virtuellen Verschwenkung der Kameraeinrichtung (7) von einer der isometrischen Ansicht (9) zugeordneten virtuellen Kameraposition zu einer der Draufsicht (10) zugeordneten virtuellen Kameraposition zugeordnet ist und wobei dieser virtuelle Schwenkwinkel in Abhängigkeit von dem Abstand anhand einer Formel ermittelt wird, und
- die Anzeige mittels einer Anzeigeeinrichtung (8) in dem Kraftfahrzeug (1) ausgegeben wird (V4),
wobei
- die Bilder mittel der Kameraeinrichtung (7) aufgezeichnet werden, die einen Öffnungswinkel von mehr als 120 Grad, insbesondere mehr als 160 Grad, insbesondere mehr als 170 Grad aufweist, und
- der virtuelle Schwenkwinkel anhand einer exponentiellen Funktion ermittelt wird, und
- der erste Grenzwert (5) und/oder der zweite Grenzwert (6) in Abhängigkeit von einem Fahrzeugmodell des Kraftfahrzeugs (1) vorgegeben werden.

2. Verfahren nach Anspruch 1, wobei der zweite Grenzwert (6) in Abhängigkeit von einer Verbauposition der Kameraeinrichtung (7) an dem Kraftfahrzeug (1) vorgegeben wird.

3. Verfahren nach einem der vorhergehenden Ansprüche, wobei der Abstand zwischen der Anhängerkupplung (2) und dem Anhänger (3) mehrmals ermittelt wird und die Anzeige mehrmals in Abhängigkeit von dem jeweiligen ermittelten Abstand angepasst wird.

4. Verfahren nach einem der vorhergehenden Ansprüche, wobei die Anzeige während eines automatischen Ankuppelvorgangs bereitgestellt wird.

5. Verfahren nach einem der vorhergehenden Ansprüche, wobei die mittels der Anzeigeeinrichtung (8) ausgegebene Anzeige eine Anhängerklaue (4) des Anhängers (3) umfasst.

6. Verfahren nach einem der vorhergehenden Ansprüche, wobei mittels einer Rückfahrkamera als Kameraeinrichtung (7) die Bilder aufgezeichnet werden.

7. Kraftfahrzeug (1), mit einer Kameraeinrichtung (7) und mit einer Anzeigeeinrichtung (8), wobei das Kraftfahrzeug (1) dazu eingerichtet ist, ein Verfahren nach einem der vorhergehenden Ansprüche durchzuführen.

## Claims

1. Method for providing a display in a motor vehicle (1), in which
- images covering an area surrounding the motor vehicle (1) and a trailer coupling (2) of the motor vehicle (1) are recorded by means of a camera device (7) (V1),
- a distance between the trailer coupling (2) and a trailer (3) is determined (V2),
- a display displaying at least the trailer coupling (2) is created on the basis of the images (V3), wherein
∘ the display is displayed as an isometric view (9) in the case of a determined distance above or equal to a first limit value (5),
∘ the display is displayed as a top view (10) in the case of a determined distance below or equal to a second limit value (6), which is lower than the first limit value (5), and
∘ the display is displayed as an intermediate perspective in the case of a distance between the first limit value (5) and the second limit value (6), wherein this intermediate perspective is associated with a virtual pivot angle of a virtual pivoting of the camera device (7) from a virtual camera position associated with the isometric view (9) to a virtual camera position associated with the top view (10), and wherein this virtual pivot angle is determined depending on the distance on the basis of a formula, and
- the display is output by means of a display device (8) in the motor vehicle (1) (V4),
wherein
- the images are recorded by means of the camera device (7), which has an aperture angle of more than 120 degrees, in particular more than 160 degrees, in particular more than 170 degrees, and
- the virtual pivot angle is determined on the basis of an exponential function, and
- the first limit value (5) and/or the second limit value (6) are predefined as a function of a vehicle model of the motor vehicle (1).

2. Method according to Claim 1, wherein the second limit value (6) is predefined as a function of an installation position of the camera device (7) on the motor vehicle (1).

3. Method according to one of the preceding claims, wherein the distance between the trailer coupling (2) and the trailer (3) is determined several times and the display is adapted several times as a function of the respective determined distance.

4. Method according to one of the preceding claims, wherein the display is provided during an automatic hitching operation.

5. Method according to one of the preceding claims, wherein the display output by means of the display device (8) covers a trailer claw (4) of the trailer (3).

6. Method according to one of the preceding claims, wherein the images are recorded by means of a reversing camera as camera device (7).

7. Motor vehicle (1), having a camera device (7) and having a display device (8), wherein the motor vehicle (1) is configured to carry out a method according to one of the preceding claims.

## Revendications

1. Procédé de fourniture d'un affichage dans un véhicule automobile (1), selon lequel
- à l'aide d'un dispositif de caméra (7), des images comprenant un environnement du véhicule automobile (1) et un attelage de remorque (2) du véhicule automobile (1) sont enregistrées (V1),
- une distance entre l'attelage de remorque (2) et une remorque (3) est déterminée (V2),
- sur la base des images, un affichage représentant au moins l'attelage de remorque (2) est produit (V3), dans lequel
∘ dans le cas d'une distance déterminée supérieure ou égale à une première valeur limite (5), l'affichage est représenté sous la forme d'une vue isométrique (9),
∘ dans le cas d'une distance déterminée inférieure ou égale à une deuxième valeur limite (6), laquelle est inférieure à la première valeur limite (5), l'affichage est représenté sous la forme d'une vue de dessus (10), et
∘ dans le cas d'une distance comprise entre la première valeur limite (5) et la deuxième valeur limite (6), l'affichage est représenté sous la forme d'une perspective intermédiaire, cette perspective intermédiaire étant associée à un angle de pivotement virtuel d'un pivotement virtuel du dispositif de caméra (7) d'une position virtuelle de caméra associée à la vue isométrique (9) à une position virtuelle de caméra associée à la vue de dessus (10) et cet angle de pivotement virtuel étant déterminé en fonction de la distance sur la base d'une formule, et
- l'affichage est affiché (V4) à l'aide d'un dispositif d'affichage (8) dans le véhicule automobile (1),
dans lequel
- les images sont enregistrées à l'aide du dispositif de caméra (7), lequel présente un angle d'ouverture de plus de 120 degrés, en particulier de plus de 160 degrés, en particulier de plus de 170 degrés, et
- l'angle de pivotement virtuel est déterminé sur la base d'une fonction exponentielle, et
- la première valeur limite (5) et/ou la deuxième valeur limite (6) est/sont prédéfinie(s) en fonction d'un modèle du véhicule automobile (1).

2. Procédé selon la revendication 1, dans lequel la deuxième valeur limite (6) est prédéfinie en fonction d'un position d'installation du dispositif de caméra (7) sur le véhicule automobile (1).

3. Procédé selon l'une des revendications précédentes, dans lequel la distance entre l'attelage de remorque (2) et la remorque (3) est déterminée plusieurs fois et l'affichage est adapté plusieurs fois en fonction de la distance déterminée respective.

4. Procédé selon l'une des revendications précédentes, dans lequel l'affichage est fourni pendant une opération automatique d'attelage.

5. Procédé selon l'une des revendications précédentes, dans lequel l'affichage affiché à l'aide du dispositif d'affichage (8) comprend une mâchoire de remorque (4) de la remorque (3).

6. Procédé selon l'une des revendications précédentes, dans lequel les images sont enregistrées à l'aide d'une caméra de recul en tant que dispositif de caméra (7).

7. Véhicule automobile (1), comportant un dispositif de caméra (7) et comportant un dispositif d'affichage (8), le véhicule automobile (1) étant conçu pour mettre en œuvre un procédé selon l'une des revendications précédentes.
